# EUROPEAN PATENT SPECIFICATION

(11) **EP 4 256 775 B1**
(45) Date of publication and mention of the grant of the patent: **21.08.2024**
(21) Application number: 21704764.6
(22) Date of filing: 10.02.2021
(51) Int. Cl.: H04M 1/02

(54) **FOLDABLE STRUCTURE FOR ELECTRONIC DEVICE**
FALTBARE STRUKTUR FÜR ELEKTRONISCHE VORRICHTUNG
STRUCTURE PLIABLE POUR DISPOSITIF ÉLECTRONIQUE

(43) Date of publication of application: 11.10.2023
(73) Proprietor: Huawei Technologies Co., Ltd., Shenzhen, Guangdong 518129 (CN)
(72) Inventor: HEISKANEN, Juuso, 16440 Kista (SE)
(74) Representative: Isarpatent
(86) International application number: PCT/EP2021/053173
(87) International publication number: WO 2022/171274

(56) References cited:
- EP-A1- 2 247 081
- US-A1- 2009 122 015
- US-A1- 2010 265 686
- US-A1- 2013 104 342
- US-A1- 2016 161 987
- US-A1- 2020 080 357

## Description

### TECHNICAL FIELD

This invention relates to a foldable structure for an electronic device, the foldable structure comprising a plurality of operably connected bodies.

### BACKGROUND

The size of electronic devices and particularly mobile devices such as mobile devices, mobile tablets and mobile phones, is an important consideration when designing electronic devices and mobile devices. The user oftentimes requests the outer dimensions of the device to be as small as possible while still providing a display that is as large as possible.

This problem may be solved by means of a foldable electronic device comprising one or several support bodies, interconnected by means of a hinge, covered by one or several displays. The support bodies and the display(s) can be folded together to provide an as small electronic device as possible, and unfolded to provide an as large display as possible.

The hinges of known foldable devices are oftentimes bulky and complex, in particular when they comprise multiple pivot points. Each pivot point requires a certain amount of components, and therefore each pivot point acts as a multiplier for the total amount of components. Multi-pivot hinges also require synchronization features. Single pivot hinges, on the other hand, provide a limited amount of possibilities when it comes to the movement of support bodies, display accommodation in the folded state, and locking features.

EP 2 247 081 A1 discloses a mobile terminal including a main body, an upper body having a display unit and disposed to be tiltable from the main body by a preset angle, a lower body having a user interface and disposed to be drawn out of the main body, and a driving unit configured to draw the lower body out of the main body in cooperation with the upper body being tilted from the main body.

US 2010/265686 A1 discloses an apparatus having first and second housings and a driver wheel. The first and second housings are coupled together so that they can be driven by the driver wheel to provide for a plurality of apparatus configurations. The apparatus is configured such that the first and second housings are slidable relative to one another from a first overlapping configuration, in which the first and second housings are substantially overlapping, to a second laterally slid configuration in which the first second housings are laterally slid with respect to one another, and then onto a third tilted configuration in which the first and second housings are tilted relative to one another. The apparatus is also configured such that continuous rotation of the driver wheel drives the movement of the apparatus from the first configuration to the second configuration and then onto the third configuration.

US 2013/104342 A1 discloses a mobile terminal including first and second cases, and a hinge shifting the first and second cases between open and closed states. The hinge including a slide hinge including a movable plate, and a support plate secured to the second case that slidably supports the movable plate. The hinge further including a rotation hinge including a fixed part secured to the first case; a rotational part rotatable on an axis common with the fixed part; an elastic member providing the rotational part with a force to rotate the rotational part with respect to the fixed part; a link mechanism connecting the rotational part with the movable plate; and a locking member locking rotation of the rotational part with respect to the fixed part. The support plate including a rotation actuating part that unlocks the locking member so that the rotational part rotates with respect to the fixed part.

US 2016/161987 A1 discloses a deck supports depressable keys. The keys can be resiliently biased to a raised state. A display panel can be pivotally coupled to the deck for movement between a deployed position and a closed position. A retraction mechanism comprises a retraction frame and a retraction drive. The retraction frame is translatable between a releasing position along the depressable keys to actuate the depressable keys to the raised state and a retracting position moving to move the depressable keys to the retracted state. The retraction drive translates the retraction frame towards the retracting position in response to pivoting of the display panel towards the closed position

US 2020/080357 A1 discloses a sliding hinge including a torque module, two brackets, a support plate, a driving gear set, and a sliding bracket is provided. The torque module has a first shaft and a second shaft adapted to rotate in opposite directions and produce a torque. The brackets are respectively disposed on the first shaft and the second shaft. The support plate is disposed on one of the brackets. The driving gear set is disposed on the support plate and coupled to the first shaft. The sliding bracket is coupled to the driving gear set and slidably disposed on a top surface of the support plate. The brackets are adapted to rotate relative to the torque module by the first shaft and the second shaft, such that the brackets are overlapped or unfolded with each other while the driving gear set drives the sliding bracket to slide along the support plate.

### SUMMARY

It is an object of the present invention to provide an improved foldable electronic device which uses space efficiently. The foregoing and other objects are achieved by the features of the independent claim. Further implementation forms are apparent from the dependent claims, the description, and the figures.

According to a first aspect according to the invention, there is provided a foldable structure for an electronic device and an electronic mobile device, the foldable structure comprising a first body, a second body, and a third body operably connected to the first body and the second body. At least one hinge assembly is configured to allow the first body to be rotated around a rotation axis with respect to the third body. The hinge assembly comprises an engagement structure and an actuator connected to the first body and the engagement structure, the actuator being fixed to the first body such that the actuator rotates simultaneously with the first body around the rotation axis. The engagement structure comprises a first engagement element pivotally connected to the third body and configured to pivot in a plane parallel with the rotation axis in response to rotation of the actuator around the rotation axis, and a second engagement element stationarily arranged on the second body. The pivoting movement of the first engagement element generates a sliding movement of the second body, with respect to the third body, in the plane as the first engagement element meshes with the second engagement element.

Such a solution allows the electronic device to be folded and unfolded without affecting its display and its function negatively while still maintaining the display in a stretched position regardless of whether the folding structure, and hence the electronic device, is folded or unfolded. Furthermore, this allows for a structurally non-complex hinge that has built-in movement synchronization.

In a possible implementation form of the first aspect, the first engagement element and the second engagement element comprise meshing teeth, providing a simple, robust, and spatially efficient solution which is easily adapted to the form factor of a specific device.

In the implementation form of the first aspect, the actuator comprises a first section fixed to the first body such that at least the first section of the actuator rotates with the first body around the rotation axis, and a second section fixed to the first engagement element such that at least the second section of the actuator rotates in the abovementioned plane, simultaneously with the rotation around the rotation axis, the rotation in the plane generating the pivoting movement of the first engagement element. This is a reliable solution for transforming rotational movement to linear movement, which does not take up much space within the foldable structure.

In a further possible implementation form of the first aspect, the actuator comprises at least one of a chain, a wire, a rack, and a sheet, allowing the actuator to be chosen and adapted to a specific device and the other components of the foldable structure.

In a further possible implementation form of the first aspect, at least a third section of the actuator extends in a first actuation plane and a fourth section of the actuator extends in a second actuation plane, the first actuation plane and the second actuation plane extending in parallel with the plane and on opposites sides of the rotation axis, the third section moving in the first actuation plane and the fourth section moving in the second actuation plane in response to the first section rotating around the rotation axis, facilitating stable and symmetrical actuation.

In a further possible implementation form of the first aspect, the third section and the fourth section move in opposite directions, allowing the pivoting movement of the first engagement element to be generated in a simple yet stable manner.

In a further possible implementation form of the first aspect, the third section and the fourth section are arranged between the first section and the second section, allowing the actuator to comprise of a single integral element.

In a further possible implementation form of the first aspect, the third body is at least partially enclosed by the second body, the second body providing support and guidance for the third body.

In a further possible implementation form of the first aspect, a first surface of the first body and a first surface of the second body are aligned in a common plane when the foldable structure is in an unfolded position, and the second body is superimposed onto the first body when the foldable structure is in a folded position, such that the foldable structure provides support for the display of the electronic device while also allowing the outer dimensions of the electronic device to be as small as possible, e.g. when not in use.

In a further possible implementation form of the first aspect, a first surface of the third body extends adjacent and parallel with the common plane when the foldable structure is in the unfolded position, providing sufficient support for the unfolded display.

In a further possible implementation form of the first aspect, a distance between the first body and the second body is at a minimum when the foldable structure is in the folded position and the distance is at a maximum when the foldable structure is in the unfolded position, providing minimal outer dimensions when in the folded position and maximum visible and usable display area when in the unfolded position.

In a further possible implementation form of the first aspect, an overlap between the second body and the third body is at a maximum when the foldable structure is in the folded position and/or the overlap is at a minimum when the foldable structure is in the unfolded position, providing minimal outer dimensions when in the folded position and maximum display support when in the unfolded position.

In a further possible implementation form of the first aspect, the first section of the actuator is fixed to the first body by means of a shaft element extending within a section of the first body, facilitating rotation of the first body with regards to the third body while taking up minimal space.

In a further possible implementation form of the first aspect, the foldable structure further comprises a locking arrangement configured to maintain the foldable structure in at least one of the folded position and the unfolded position, allowing more stable end positions, wherein locking and releasing of the locking arrangement is executed by means of an increase in the force applied onto the first body and/or the second body in order to rotate the first body around the rotation axis, providing a locking arrangement which does not need to be locked or unlocked using separate features.

In a further possible implementation form of the first aspect, the locking arrangement comprises a spring mechanism, providing a simple solution for increasing the force applied onto the first body and/or the second body.

In a further possible implementation form of the first aspect, the locking arrangement comprises a first cam surface and a second cam surface, the first cam surface being arranged on a surface of the shaft element or on a surface of the first body, the second cam surface being arranged on a cam element connected to the third body, the first cam surface and the second cam surface being configured to interlock when the foldable structure is in at least one of the folded position and the unfolded position, providing a reliable and secure solution which does not take up excess space.

In a further possible implementation form of the first aspect, the foldable structure further comprises a motor configured to rotate the first body around the rotation axis, allowing the device to be automatically operated instead of manually.

According to a second aspect, there is provided an electronic device comprising the foldable structure according to the above and a display, the first body, the second body, and the third body of the foldable structure being configured to support the display. Such an electronic device can be folded and unfolded without affecting the display negatively while still maintaining the display in a stretched position regardless of whether the electronic device is folded or unfolded.

In a possible implementation form of the second aspect, the display is fixedly connected to the first body and the second body of the foldable structure, allowing the display to be suitably stretched while still allowing movement of other components within the foldable structure.

This and other aspects will be apparent from and the embodiments described below.

### BRIEF DESCRIPTION OF THE DRAWINGS

In the following detailed portion of the present disclosure, the aspects, embodiments, and implementations will be explained in more detail with reference to the example embodiments shown in the drawings, in which:
Fig. 1 shows a schematic side view of an electronic device comprising a foldable structure according to an example of the embodiments of the disclosure;
Fig. 2 shows a perspective bottom view of an electronic device comprising a foldable structure according to an example of the embodiments of the disclosure;
Fig. 3a shows a perspective top view of an electronic device comprising a foldable structure according to an example of the embodiments of the disclosure, wherein the foldable structure is in a folded position;
Fig. 3b shows a perspective top view of the example of Fig. 3a, wherein said foldable structure is in an unfolded position;
Fig. 4a shows a perspective top view of a section of a foldable structure according to an example of the embodiments of the disclosure;
Fig. 4b shows a schematic side view of the example of Fig. 3a;
Fig. 5 shows a partial perspective top view of a foldable structure according to an example of the embodiments of the disclosure;
Fig. 6 shows a partial perspective top view of a foldable structure according to an example of the embodiments of the disclosure;
Fig. 7 shows a side view of a locking arrangement of a foldable structure according to an example of the embodiments of the disclosure;
Fig. 8a shows a side view of a cam element of a locking arrangement of a foldable structure according to an example of the embodiments of the disclosure;
Fig. 8b shows a side view of a further cam element of a locking arrangement of a foldable structure according to an example of the embodiments of the disclosure.

### DETAILED DESCRIPTION

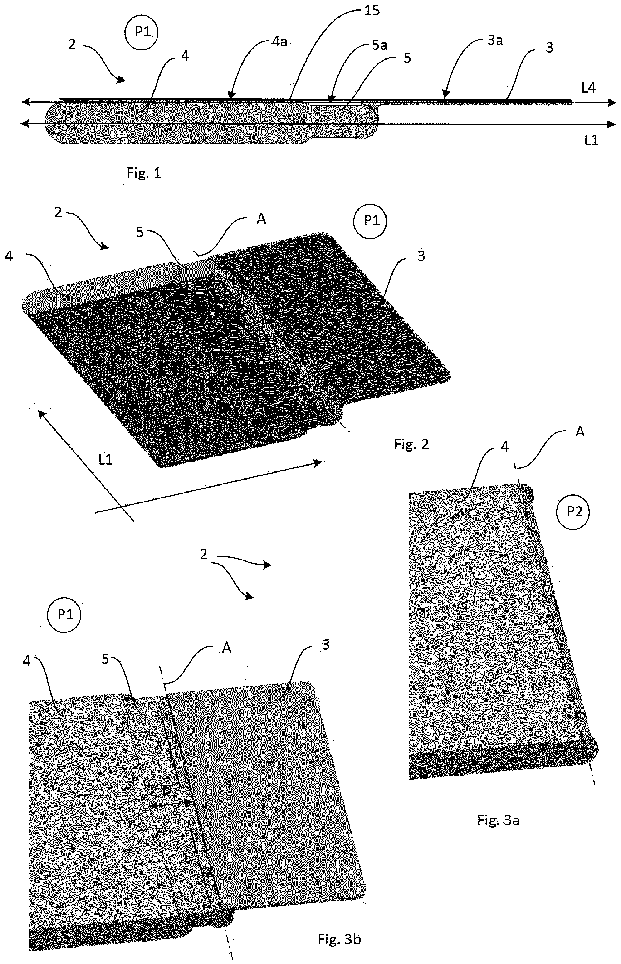

Figs. 1 to 3b show schematic illustrations of an electronic device 2 comprising a display 15 and a foldable structure 1. The foldable structure 1 comprises a first body 3, the second body 4, and the third body 5 which are configured to support the display 15 and, optionally, additional components of the electronic device 2. Display 15 may be fixedly connected to the first body 3 and the second body 4 of the foldable structure 1, i.e., not to the third body 5 such that movement of the third body 5 is not restricted in any way by the display 15. As shown in Figs 3a and 3b, the foldable structure 1 may be in a folded position P2 and an unfolded position P1, the display having a larger visible area when the foldable structure 1 is in the unfolded position P1.

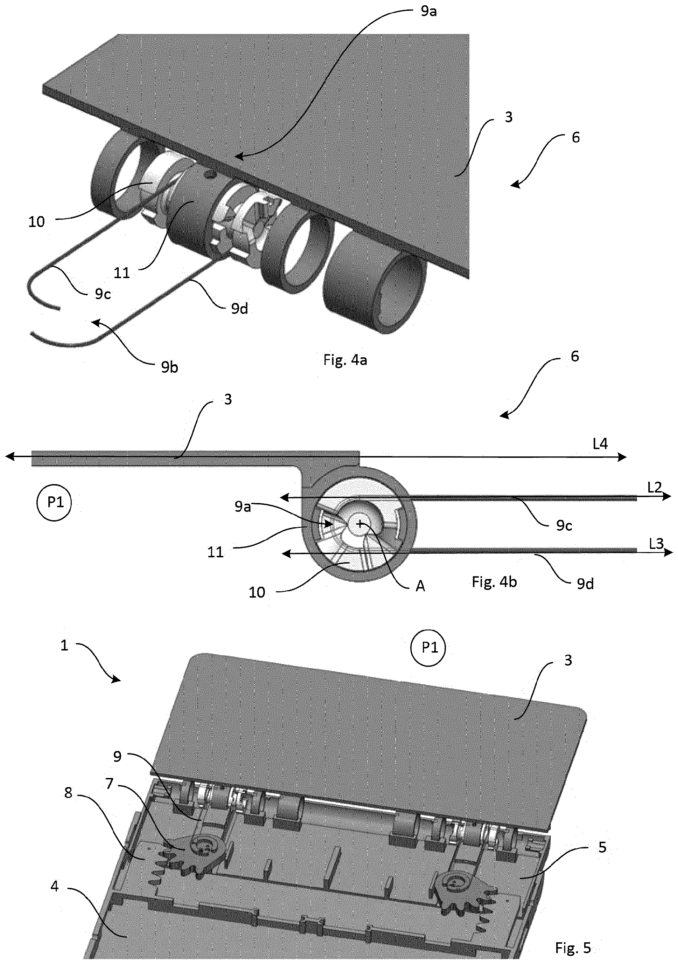

Figs. 4a to 6 show the foldable structure 1 in more detail. The foldable structure 1 comprises a first body 3, a second body 4, a third body 5, and at least one hinge assembly 6. The third body 5 is operably connected to the first body 3 and the second body 4. The hinge assembly 6 is configured to allow the first body 3 to be rotated around a rotation axis A with respect to the third body 5.

The hinge assembly 6 comprises an engagement structure and an actuator 9 which is connected to the first body 3 and the engagement structure.

The engagement structure comprises a first engagement element 7 which is pivotally connected to the third body 5, and which is configured to pivot in a plane L1 parallel with the rotation axis A in response to rotation of the actuator 9 around the rotation axis A. The engagement structure also comprises a second engagement element 8 arranged on the second body 4, preferably stationarily. The first engagement element 7 engages the second engagement element, to a varying degree and/or at varying locations, as the first engagement element 7 pivots in plane L1.

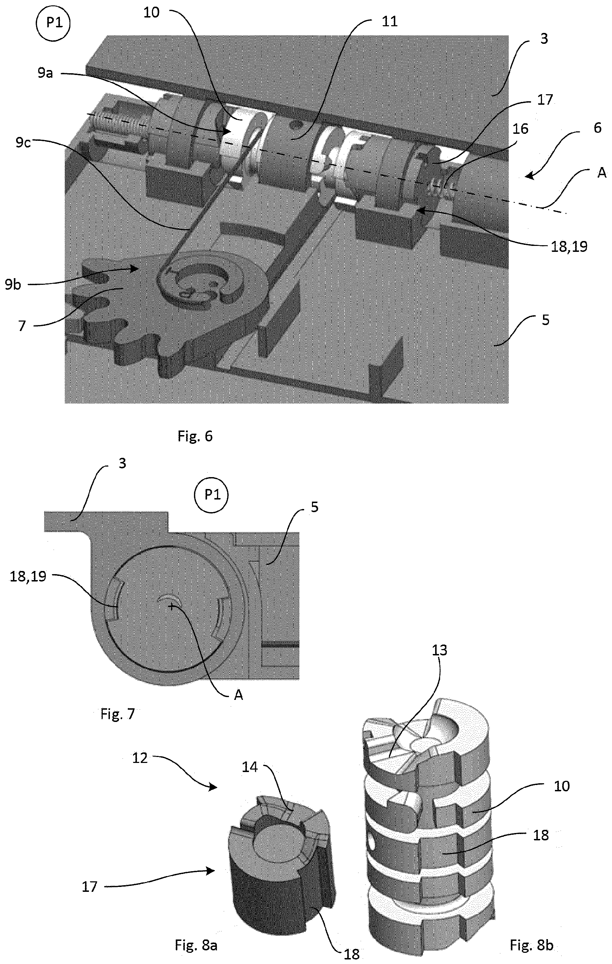

The pivoting movement of the first engagement element 7 generates a sliding movement of the second body 4, with respect to the third body 5, in the plane L1 as the first engagement element 7 meshes with the second engagement element 8. As shown in Figs. 5 and 6, the first engagement element 7 and the second engagement element 8 may comprise meshing teeth facilitating the sliding movement, forming a rack-and-pinion structure. Other solutions are conceivable, such as for example both the first engagement element 7 and the second engagement element 8 being pivotable to some extent, or engagement by means of something other than teeth or cogs. The engagement structure may, e.g., comprise a worm gear.

The actuator 9 is fixed to the first body 3 such that the actuator 9, as shown in Figs. 4a to 6, rotates simultaneously with the first body 3 around the rotation axis A. The actuator 9 may comprise at least one of a chain, a wire, a rack, and a sheet.

The actuator 9, as shown in Figs. 4a to 6, comprises a first section 9a which is fixed to the first body 3 such that at least the first section 9a of the actuator 9 rotates with the first body 3 around the rotation axis A.

The actuator 9 also comprises a second section 9b fixed to the first engagement element 7 such that at least the second section 9b of the actuator 9 rotates in the plane L1, simultaneously with the rotation around the rotation axis A.

The rotation of the second section 9b, in plane L1, generates the pivoting movement of the first engagement element 7.

The actuator 9 may also comprise a third section 9c which extends in a first actuation plane L2 and a fourth section 9d which extends in a second actuation plane L3, as shown in Fig. 4b. The first actuation plane L2 and the second actuation plane L3 extend in parallel with the plane L1 and on opposites sides of the rotation axis A. The third section 9c and the fourth section 9d may be arranged between the first section 9a and the second section 9b of the actuator 9.

The third section 9c and the fourth section 9d may be connected to the second section 9b of the actuator at different heights relative the rotation axis A, and also at opposite sides of the pivot axis (not shown) around which the first engagement element 7 pivots.

The third section 9c may move in the first actuation plane L2 and the fourth section 9d may move in the second actuation plane L3 in response to the first section 9a rotating around the rotation axis A. Preferably, the third section 9c and the fourth section 9d move simultaneously and/or in opposite directions. When moving the foldable structure 1 from an unfolded position P1 to a folded position P2, the third section 9c may move in a direction perpendicular to and towards the rotation axis A, while the fourth section 9d moves in a direction perpendicular to and away from the rotation axis A. Correspondingly, when moving the foldable structure 1 from the folded position P2 to the unfolded position P1, the third section 9c may move in a direction perpendicular to and away from the rotation axis A, while the fourth section 9d moves in a direction perpendicular to and towards the rotation axis A.

As shown in Figs. 1 to 3b, the third body 5 may be at least partially enclosed by the second body 4. This allows the movement of the third body 5 to be steered and maintained in plane L1. Nevertheless, third body 5 may extend on top of or below the second body 4.

A first surface 3a of the first body 3 and a first surface 4a of the second body 4 may be aligned in a common plane L4 when the foldable structure 1 is in the unfolded position P1, providing support for the display 15 of the electronic device 2. Correspondingly, the second body 4 may be superimposed onto the first body 3 when the foldable structure 1 is in the folded position P2, allowing the outer dimensions of the electronic device 2 to be as small as possible, e.g., when not in use.

As shown in Fig. 3b, a distance D between the first body 3 and the second body 4 may be at a minimum when the foldable structure 1 is in the folded position P2, and the very same distance D may be at a maximum when the foldable structure 1 is in the unfolded position P1. In other words, the overlap between the second body 4 and the third body 5 may be at a maximum when the foldable structure 1 is in the folded position P2, and the overlap may be at a minimum when the foldable structure 1 is in the unfolded position P1.

The first surface 5a of the third body 5 may extend adjacent and parallel with the common plane L4 when the foldable structure 1 is in the unfolded position P1, such that there is an as small deviation as possible between first surface 5a and first surfaces 3a, 4a.

As shown in Figs. 2 to 6, the first section 9a of the actuator 9 may be fixed to the first body 3 by means of one or several shaft elements 10 extending within one or several sections 11 of the first body 3. Section 11 may be a substantially hollow cylinder, the shaft element 10 extending therein such that the shaft element 10 and the section 11 are colinear. Preferably, as shown in Fig. 5, the foldable structure 1 comprises two shaft elements 10 arranged at a distance from each other along the rotation axis A. Section 11 may be part of the first body 3 or attached thereto.

As shown in Figs. 7 and 8, the foldable structure 1 may also comprise a locking arrangement 12 configured to maintain the foldable structure 1 in at least one of the folded position P2 and the unfolded position P1. The locking and releasing of the locking arrangement 12 may be executed by means of an increase in the force applied onto the first body 3 and/or the second body 4 to rotate the first body 3 around the rotation axis A.

To provide such an increase in force, the locking arrangement 12 may comprise a spring mechanism 16. The locking arrangement 12 may also comprise a first cam surface 13 and a second cam surface 14, the first cam surface 13 being arranged on a surface of the shaft element 10, as shown in Fig. 8b, or on a surface of the first body 3. The second cam surface 14 may be arranged on a separate cam element 17, as shown in Fig. 8a, connected to the third body 5. The first cam surface 13 and the second cam surface 14 may be configured to interlock when the foldable structure 1 is in at least one of the folded position P2 and the unfolded position P1, such that an increase in force is required, by the user, when moving the foldable structure 1, i.e. the electronic device 2, from the folded position P2 or the unfolded position P1. The first cam surface 13 and the second cam surface 14 are preferably arranged on short ends of shaft element 10, first body 3, or cam element 17. The locking arrangement 12 may furthermore comprise at least one groove 18 extending along a longitudinal surface of shaft element 10 and/or cam element 17, the groove(s) 18 being configured to interlock with corresponding ridges 19, such that the cam element 17 rotates along with the third body 5 and shaft element 10 rotates along with the first body 3.

The foldable structure 1 may be fully user-operated, i.e., actuated in response to a user manually folding and unfolding the structure. The foldable structure 1 may also comprise a motor (not shown) configured to rotate the first body 3 around the rotation axis A, subsequently leading to actuation of the remainder of the foldable structure 1.

The various aspects and implementations have been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

The reference signs used in the claims shall not be construed as limiting the scope. Unless otherwise indicated, the drawings are intended to be read (e.g., cross-hatching, arrangement of parts, proportion, degree, etc.) together with the specification, and are to be considered a portion of the entire written description of this disclosure. As used in the description, the terms "horizontal", "vertical", "left", "right", "up" and "down", as well as adjectival and adverbial derivatives thereof (e.g., "horizontally", "rightwardly", "upwardly", etc.), simply refer to the orientation of the illustrated structure as the particular drawing figure faces the reader.

Similarly, the terms "inwardly" and "outwardly" generally refer to the orientation of a surface relative to its axis of elongation, or axis of rotation, as appropriate.

## Claims

1. A foldable structure (1) for an electronic device (2), said foldable structure (1) comprising
a first body (3);
a second body (4);
a third body (5) operably connected to said first body (3) and said second body (4); and
at least one hinge assembly (6), said first body (3) being configured to rotate around a rotation axis (A) by means of the one hinge assembly with respect to said third body (5),
said hinge assembly (6) comprising an engagement structure and an actuator (9) connected to said first body (3) and said engagement structure,
said actuator (9) being fixed to said first body (3) and said actuator (9) being adapted to rotate simultaneously with said first body (3) around said rotation axis (A),
said engagement structure comprising a first engagement element (7) pivotally connected to said third body (5) and configured to pivot in a plane (L1) parallel with said rotation axis (A) in response to rotation of said actuator (9) around said rotation axis (A), and
a second engagement element (8) arranged on said second body (4),
said pivoting movement of said first engagement element (7) being adapted to generate a sliding movement of said second body (4), with respect to said third body (5), in said plane (L1) as said first engagement element (7) meshes with said second engagement element (8); and
wherein said actuator (9) comprises
a first section (9a) fixed to said first body (3), said at least first section (9a) of said actuator (9) being adapted to rotate with said first body (3) around said rotation axis (A), and
a second section (9b) fixed to said first engagement element (7), said at least second section (9b) of said actuator (9) being adapted to rotate in said plane (L1), simultaneously with said rotation around said rotation axis (A), said rotation in said plane (L1) generating said pivoting movement of said first engagement element (7).

2. The foldable structure (1) according to claim 1, wherein said first engagement element (7) and said second engagement element (8) comprise meshing teeth.

3. The foldable structure (1) according to claim 1, wherein said actuator (9) comprises at least one of a chain, a wire, a rack, and a sheet.

4. The foldable structure (1) according to claim 1 or 3, wherein at least a third section (9c) of said actuator (9) extends in a first actuation plane (L2) and a fourth section (9d) of said actuator (9) extends in a second actuation plane (L3), said first actuation plane (L2) and said second actuation plane (L3) extending in parallel with said plane (L1) and on opposites sides of said rotation axis (A), said third section (9c) being adapted to move in said first actuation plane (L2) and said fourth section (9d) being adapted to move in said second actuation plane (L3) in response to said first section (9a) rotating around said rotation axis (A).

5. The foldable structure (1) according to claim 4, wherein said third section (9c) and said fourth section (9d) are adapted to move in opposite directions.

6. The foldable structure (1) according to any one of the previous claims, wherein a first surface (3a) of said first body (3) and a first surface (4a) of said second body (4) are aligned in a common plane (L4) when said foldable structure (1) is in an unfolded position (P1), and said second body (4) is superimposed onto said first body (3) when said foldable structure (1) is in a folded position (P2).

7. The foldable structure (1) according to claim 6, wherein a distance (D) between said first body (3) and said second body (4) is at a minimum when said foldable structure (1) is in said folded position (P2) and said distance (D) is at a maximum when said foldable structure (1) is in said unfolded position (P1).

8. The foldable structure (1) according to any one of the previous claims, wherein said first section (9a) of said actuator (9) is fixed to said first body (3) by means of a shaft element (10) extending within a section (11) of said first body (3).

9. The foldable structure (1) according to any one of claims 6 to 8, further comprising a locking arrangement (12) configured to maintain said foldable structure (1) in at least one of said folded position (P2) and said unfolded position (P1), wherein said locking arrangement (12) is adapted to execute locking and releasing and rotate said first body (3) around said rotation axis (A) by means of an increase in force applied onto said first body (3) and/or said second body (4).

10. The foldable structure (1) according to claim 9, wherein said locking arrangement (12) comprises a spring mechanism.

11. The foldable structure (1) according to claim 10, wherein said locking arrangement (12) comprises a first cam surface (13) and a second cam surface (14), said first cam surface (13) being arranged on a surface of said shaft element (10) or on a surface of said first body (3), said second cam surface (14) being arranged on a cam element connected to said third body (5), said first cam surface (13) and said second cam surface (14) being configured to interlock when said foldable structure (1) is in at least one of said folded position (P2) and said unfolded position (P1).

12. The foldable structure (1) according to any one of the previous claims, further comprising a motor configured to rotate said first body (3) around said rotation axis (A).

13. An electronic device (2) comprising the foldable structure (1) according to any one of claims 1 to 12 and a display (15), the first body (3), the second body (4), and the third body (5) of said foldable structure (1) being configured to support said display (15).

14. The electronic device (2) according to claim 13, wherein said display (15) is fixedly connected to said first body (3) and said second body (4) of said foldable structure (1).

## Patentansprüche

1. Faltbare Struktur (1) für eine elektronische Vorrichtung (2), wobei die faltbare Struktur (1) Folgendes umfasst:
einen ersten Körper (3);
einen zweiten Körper (4);
einen dritten Körper (5), der betriebsmäßig mit dem ersten Körper (3) und dem zweiten Körper (4) verbunden ist; und
mindestens eine Scharnierbaugruppe (6), wobei der erste Körper (3) dazu konfiguriert ist, sich durch die eine Scharnierbaugruppe in Bezug auf den dritten Körper (5) um eine Drehachse (A) zu drehen,
wobei die Scharnierbaugruppe (6) eine Eingriffsstruktur und einen Aktor (9) umfasst, der mit dem ersten Körper (3) und der Eingriffsstruktur verbunden ist,
wobei der Aktor (9) an dem ersten Körper (3) befestigt ist und der Aktor (9) dazu ausgelegt ist, sich gleichzeitig mit dem ersten Körper (3) um die Drehachse (A) zu drehen,
wobei die Eingriffsstruktur ein erstes Eingriffselement (7) umfasst, das schwenkbar mit dem dritten Körper (5) verbunden und dazu konfiguriert ist, als Reaktion auf die Drehung des Aktors (9) um die Drehachse (A) in einer Ebene (L1) parallel zu der Drehachse (A) zu schwenken, und
ein zweites Eingriffselement (8), das an dem zweiten Körper (4) angeordnet ist,
wobei die Schwenkbewegung des ersten Eingriffselements (7) dazu ausgelegt ist, eine Gleitbewegung des zweiten Körpers (4) in Bezug auf den dritten Körper (5) in der Ebene (L1) zu erzeugen, wenn das erste Eingriffselement (7) mit dem zweiten Eingriffselement (8) in Eingriff kommt; und
wobei der Aktor (9) Folgendes umfasst:
einen ersten Abschnitt (9a), der an dem ersten Körper (3) befestigt ist, wobei der mindestens eine erste Abschnitt (9a) des Aktors (9) dazu ausgelegt ist, sich mit dem ersten Körper (3) um die Drehachse (A) zu drehen, und
einen zweiten Abschnitt (9b), der an dem ersten Eingriffselement (7) befestigt ist, wobei der mindestens eine zweite Abschnitt (9b) des Aktors (9) dazu ausgelegt ist, sich in der Ebene (L1) gleichzeitig mit der Drehung um die Drehachse (A) zu drehen, wobei die Drehung in der Ebene (L1) die Schwenkbewegung des ersten Eingriffselements (7) erzeugt.

2. Faltbare Struktur (1) nach Anspruch 1, wobei das erste Eingriffselement (7) und das zweite Eingriffselement (8) ineinandergreifende Zähne umfassen.

3. Faltbare Struktur (1) nach Anspruch 1, wobei der Aktor (9) mindestens eines einer Kette, eines Drahtes, einer Zahnstange oder eines Bleches umfasst.

4. Faltbare Struktur (1) nach Anspruch 1 oder 3, wobei sich mindestens ein dritter Abschnitt (9c) des Aktors (9) in einer ersten Betätigungsebene (L2) erstreckt und sich ein vierter Abschnitt (9d) des Aktors (9) in einer zweiten Betätigungsebene (L3) erstreckt, wobei sich die erste Betätigungsebene (L2) und die zweite Betätigungsebene (L3) parallel zu der Ebene (L1) und auf gegenüberliegenden Seiten der Drehachse (A) erstrecken, wobei der dritte Abschnitt (9c) dazu ausgelegt ist, sich in der ersten Betätigungsebene (L2) zu bewegen, und wobei der vierte Abschnitt (9d) dazu ausgelegt ist, sich als Reaktion auf die Drehung des ersten Abschnitts (9a) um die Drehachse (A) in der zweiten Betätigungsebene (L3) zu bewegen.

5. Faltbare Struktur (1) nach Anspruch 4, wobei der dritte Abschnitt (9c) und der vierte Abschnitt (9d) dazu ausgelegt sind, sich in entgegengesetzte Richtungen zu bewegen.

6. Faltbare Struktur (1) nach einem der vorhergehenden Ansprüche, wobei eine erste Oberfläche (3a) des ersten Körpers (3) und eine erste Oberfläche (4a) des zweiten Körpers (4) in einer gemeinsamen Ebene (L4) ausgerichtet sind, wenn sich die faltbare Struktur (1) in einer entfalteten Position (P1) befindet, und der zweite Körper (4) auf dem ersten Körper (3) aufliegt, wenn sich die faltbare Struktur (1) in einer gefalteten Position (P2) befindet.

7. Faltbare Struktur (1) nach Anspruch 6, wobei ein Abstand (D) zwischen dem ersten Körper (3) und dem zweiten Körper (4) minimal ist, wenn sich die faltbare Struktur (1) in der gefalteten Position (P2) befindet, und der Abstand (D) maximal ist, wenn sich die faltbare Struktur (1) in der entfalteten Position (P1) befindet.

8. Faltbare Struktur (1) nach einem der vorhergehenden Ansprüche, wobei der erste Abschnitt (9a) des Aktors (9) durch ein Wellenelement (10), das sich innerhalb eines Abschnitts (11) des ersten Körpers (3) erstreckt, an dem ersten Körper (3) befestigt ist.

9. Faltbare Struktur (1) nach einem der Ansprüche 6 bis 8, ferner umfassend eine Verriegelungsanordnung (12), die dazu konfiguriert ist, die faltbare Struktur (1) in mindestens einer der gefalteten Position (P2) und der entfalteten Position (P1) zu halten, wobei die Verriegelungsanordnung (12) dazu ausgelegt ist, Verriegeln und Lösen auszuführen und den ersten Körper (3) durch eine Erhöhung der Kraft, die auf den ersten Körper (3) und/oder den zweiten Körper (4) ausgeübt wird, um die Drehachse (A) zu drehen.

10. Faltbare Struktur (1) nach Anspruch 9, wobei die Verriegelungsanordnung (12) einen Federmechanismus umfasst.

11. Faltbare Struktur (1) nach Anspruch 10, wobei die Verriegelungsanordnung (12) eine erste Nockenfläche (13) und eine zweite Nockenfläche (14) umfasst, wobei die erste Nockenfläche (13) auf einer Oberfläche des Wellenelements (10) oder auf einer Oberfläche des ersten Körpers (3) angeordnet ist, wobei die zweite Nockenfläche (14) auf einem Nockenelement angeordnet ist, das mit dem dritten Körper (5) verbunden ist, wobei die erste Nockenfläche (13) und die zweite Nockenfläche (14) dazu konfiguriert sind, ineinanderzugreifen, wenn sich die faltbare Struktur (1) in mindestens einer der gefalteten Position (P2) und der entfalteten Position (P1) befindet.

12. Faltbare Struktur (1) nach einem der vorhergehenden Ansprüche, ferner umfassend einen Motor, der dazu konfiguriert ist, den ersten Körper (3) um die Drehachse (A) zu drehen.

13. Elektronische Vorrichtung (2), umfassend die faltbare Struktur (1) nach einem der Ansprüche 1 bis 12 und eine Anzeige (15), wobei der erste Körper (3), der zweite Körper (4) und der dritte Körper (5) der faltbaren Struktur (1) dazu konfiguriert sind, die Anzeige (15) zu stützen.

14. Elektronische Vorrichtung (2) nach Anspruch 13, wobei die Anzeige (15) fest mit dem ersten Körper (3) und dem zweiten Körper (4) der faltbaren Struktur (1) verbunden ist.

## Revendications

1. Structure pliable (1) pour un dispositif électronique (2), ladite structure pliable (1) comprenant
un premier corps (3) ;
un deuxième corps (4) ;
un troisième corps (5) relié fonctionnellement audit premier corps (3) et audit deuxième corps (4) ; et
au moins un ensemble charnière (6), ledit premier corps (3) étant configuré pour tourner autour d'un axe de rotation (A) au moyen de l'un ensemble charnière par rapport audit troisième corps (5),
ledit ensemble charnière (6) comprenant une structure d'engagement et un actionneur (9) relié audit premier corps (3) et à ladite structure d'engagement,
ledit actionneur (9) étant fixé audit premier corps (3) et ledit actionneur (9) étant adapté pour tourner simultanément avec ledit premier corps (3) autour dudit axe de rotation (A),
ladite structure d'engagement comprenant un premier élément d'engagement (7) relié de manière pivotante audit troisième corps (5) et configuré pour pivoter dans un plan (L1) parallèle audit axe de rotation (A) en réponse à la rotation dudit actionneur (9) autour dudit axe de rotation (A), et
un second élément d'engagement (8) agencé sur ledit deuxième corps (4),
ledit mouvement de pivotement dudit premier élément d'engagement (7) étant adapté pour générer un mouvement de glissement dudit deuxième corps (4), par rapport audit troisième corps (5), dans ledit plan (L1) tandis que ledit premier élément d'engagement (7) vient en prise avec ledit second élément d'engagement (8) ; et
dans laquelle ledit actionneur (9) comprend
une première section (9a) fixée audit premier corps (3), ladite au moins première section (9a) dudit actionneur (9) étant adaptée pour tourner avec ledit premier corps (3) autour dudit axe de rotation (A), et
une deuxième section (9b) fixée audit premier élément d'engagement (7), ladite au moins deuxième section (9b) dudit actionneur (9) étant adaptée pour tourner dans ledit plan (L1), simultanément à ladite rotation autour dudit axe de rotation (A), ladite rotation dans ledit plan (L1) générant ledit mouvement de pivotement dudit premier élément d'engagement (7).

2. Structure pliable (1) selon la revendication 1, dans laquelle ledit premier élément d'engagement (7) et ledit second élément d'engagement (8) comprennent des dents de mise en prise.

3. Structure pliable (1) selon la revendication 1, dans laquelle ledit actionneur (9) comprend au moins l'un parmi une chaîne, un fil, une crémaillère, et une feuille.

4. Structure pliable (1) selon la revendication 1 ou 3, dans laquelle au moins une troisième section (9c) dudit actionneur (9) s'étend dans un premier plan d'actionnement (L2) et une quatrième section (9d) dudit actionneur (9) s'étend dans un second plan d'actionnement (L3), ledit premier plan d'actionnement (L2) et ledit second plan d'actionnement (L3) s'étendant parallèlement audit plan (L1) et sur des côtés opposés dudit axe de rotation (A), ladite troisième section (9c) étant adaptée pour se déplacer dans ledit premier plan d'actionnement (L2) et ladite quatrième section (9d) étant adaptée pour se déplacer dans ledit second plan d'actionnement (L3) en réponse à la rotation de ladite première section (9a) autour dudit axe de rotation (A).

5. Structure pliable (1) selon la revendication 4, dans laquelle ladite troisième section (9c) et ladite quatrième section (9d) sont adaptées pour se déplacer dans des directions opposées.

6. Structure pliable (1) selon l'une quelconque des revendications précédentes, dans laquelle une première surface (3a) dudit premier corps (3) et une première surface (4a) dudit deuxième corps (4) sont alignées dans un plan commun (L4) lorsque ladite structure pliable (1) est dans une position dépliée (P1), et ledit deuxième corps (4) est superposé audit premier corps (3) lorsque ladite structure pliable (1) est dans une position pliée (P2).

7. Structure pliable (1) selon la revendication 6, dans laquelle une distance (D) entre ledit premier corps (3) et ledit deuxième corps (4) est minimale lorsque ladite structure pliable (1) est dans ladite position pliée (P2) et ladite distance (D) est maximale lorsque ladite structure pliable (1) est dans ladite position dépliée (P1).

8. Structure pliable (1) selon l'une quelconque des revendications précédentes, dans laquelle ladite première section (9a) dudit actionneur (9) est fixée audit premier corps (3) au moyen d'un élément d'arbre (10) s'étendant à l'intérieur d'une section (11) dudit premier corps (3).

9. Structure pliable (1) selon l'une quelconque des revendications 6 à 8, comprenant également un agencement de verrouillage (12) configuré pour maintenir ladite structure pliable (1) dans au moins l'une parmi ladite position pliée (P2) et ladite position dépliée (P1), dans laquelle ledit agencement de verrouillage (12) est adapté pour verrouiller, déverrouiller et faire tourner ledit premier corps (3) autour dudit axe de rotation (A) au moyen d'une augmentation de la force appliquée sur ledit premier corps (3) et/ou ledit deuxième corps (4).

10. Structure pliable (1) selon la revendication 9, dans laquelle ledit agencement de verrouillage (12) comprend un mécanisme à ressort.

11. Structure pliable (1) selon la revendication 10, dans laquelle ledit agencement de verrouillage (12) comprend une première surface de came (13) et une seconde surface de came (14), ladite première surface de came (13) étant agencée sur une surface dudit élément d'arbre (10) ou sur une surface dudit premier corps (3), ladite seconde surface de came (14) étant agencée sur un élément de came relié audit troisième corps (5), ladite première surface de came (13) et ladite seconde surface de came (14) étant configurées pour s'emboîter lorsque ladite structure pliable (1) est dans au moins l'une parmi ladite position pliée (P2) et ladite position dépliée (P1).

12. Structure pliable (1) selon l'une quelconque des revendications précédentes, comprenant également un moteur configuré pour faire tourner ledit premier corps (3) autour dudit axe de rotation (A).

13. Dispositif électronique (2) comprenant la structure pliable (1) selon l'une quelconque des revendications 1 à 12 et un affichage (15), le premier corps (3), le deuxième corps (4), et le troisième corps (5) de ladite structure pliable (1) étant configurés pour supporter ledit affichage (15).

14. Dispositif électronique (2) selon la revendication 13, dans lequel ledit affichage (15) est relié de manière fixe audit premier corps (3) et audit deuxième corps (4) de ladite structure pliable (1).
